# EUROPÄISCHE PATENTSCHRIFT

(11) **EP 0 825 127 B1**
(45) Veröffentlichungstag und Bekanntmachung des Hinweises auf die Patenterteilung: **12.07.2000**
(21) Anmeldenummer: 97113286.5
(22) Anmeldetag: 01.08.1997
(51) Int. Cl.: B65D 23/08

(54) **Glasfläschchen mit einem umspritzten Kunststoffüberzug, Verfahren zu seiner Herstellung und Vorrichtung zur Durchführung des Verfahrens**
Glass vial with overmoulded plastic sheath, process for its manufacture and device for carrying out the process
Flacon en verre revêtu d'une gaine plastique surmoulée, procédé pour sa fabrication et dispositif pour la mise en oeuvre de ce procédé

(30) Priorität: 14.08.1996 DE 19632664
(43) Veröffentlichungstag der Anmeldung: 25.02.1998
(73) Patentinhaber: Schott Glas, 55122 Mainz (DE); CARL-ZEISS-STIFTUNG trading as Schott Glas, 55122 Mainz (DE)
(72) Erfinder: Bleile, Erwin, 79395 Neuenburg (DE); Geiger, Andreas, 55286 Wörrstadt (DE); Heinz, Jochen, Dr., 55578 Vendersheim (DE); Schlüter, Reinhard, 79432 Heitersheim (DE); Spallek, Michael, Dr., 55218 Ingelheim (DE); Reinhard, Michael, Dr., 55270 Ober-Olm (DE)
(74) Vertreter: Fuchs Mehler Weiss & Fritzsche

(56) Entgegenhaltungen:
- DE-A- 2 259 755
- DE-B- 1 108 383
- FR-A- 2 368 346
- FR-A- 2 631 581
- GB-A- 902 300
- US-A- 2 929 525
- US-A- 3 143 250

## Beschreibung

Die Erfindung bezieht sich auf ein Glasfläschchen mit einem umhüllenden Kunststoffüberzug gemäß den Merkmalen des Oberbegriffes des Anspruches 1. Die Erfindung bezieht sich ferner auf ein Verfahren zur Herstellung des umhüllenden Glasfläschchens und auf eine Vorrichtung zur Durchführung des Verfahrens.

Glasbehältnisse verschiedener Gattung mit einem Kunststoff-Überzug, der auf unterschiedliche Weise mit den unterschiedlichsten Kunststoffen aufgebracht wird, sind durch zahlreiche Druckschriften bekanntgeworden.

So wird z.B. in der DE 23 12 694 C3 lösungsmittelfreies Polyurethan mit einer bestimmten Mischung und vorgegebener Dicke bzw. Spannungsfestigkeit und Dehnfähigkeit, auf ein Glasgefäß aufgebracht.

Die DE 27 09 451 C2 beschreibt eine beschichtete Glasflasche, deren Außen-Oberseite mit einer Schicht eines thermisch härtbaren Materials bedeckt ist, das aus einer pulverförmigen Zusammensetzung gebildet ist, die ein Gemisch von einem blockierten organischen Polyisocyanat und einem hydrolysierten Äthylen-Vinylesthercopolymer und/oder einer Carboxyl-modifizierten Version des hydrolysierten Copolymers enthält.

Die DE-AS 26 09 931 beschreibt ein Verfahren, bei dem auf die Oberfläche eines Glasbehälters ein Gemisch eines elastomeren organischen Polymeren und einer organischen Peroxid-Verbindung aufgetragen und danach diese Überzugsmasse in situ derart mit Energie beaufschlagt wird, daß das Polymere vernetzt wird.

Es ist auch durch die DE-AS 23 37 331 und die DE-OS 23 30 804 bekanntgeworden, derartige Beschichtungen bzw. Ummantelungen bei Glasflaschen vorzunehmen, die eine Substanz unter erhöhtem Druck aufnehmen.

Durch diese Schutz-Kunststoffüberzüge soll erreicht werden, daß Glasbruchstücke zusammengehalten werden, falls der überzogene Glasbehälter zu Bruch geht. Der Kunststoff-Überzug dient damit als Berst- und Splitterschutz.

Soweit bei dem vorgenannten Stand der Technik Glasbehältnisse konkretisiert sind, werden Bierflaschen, Kosmetikbehälter und dergl. genannt.

Die Erfindung geht jedoch aus von einer speziellen Gattung von Behältnissen, nämlich Druckbehältern, die mit insbesondere medizinisch wirksamen Substanzen und einem Treibmittel unter Druck befüllbar sind und deren Öffnung mit einem Abgabeorgan, insbesondere Dosierventil, verschließbar ist. In Verbindung mit einem Abgabekopf, welcher mit dem Abgabeorgan so zusammenwirkt, daß beim Pressen beider Teile gegeneinander das Abgabeorgan betätigt wird und eine bestimmte Menge der medizinisch wirksamen Sbustanz als Aerosol aus einer Sprühöffnung austritt, dienen diese Produkte als Applikator für medizinische Anwendungen, insbesondere bei Asthmatikern und anderen Bronchialleiden.

Es ist bekannt, für derartige Applikatoren Druckbehälter aus metallischen Werkstoffen einzusetzen. Der Berst- und Splitterschutz wird bei solchen Druckbehältern durch die diesbezüglich vorteilhaften Eigenschaften des ausgewählten Materials (hohe Zähigkeit, hohe Festigkeit) bewirkt.

Nachteilig an diesen Druckbehältern ist jedoch, daß der nicht transparente Druckbehälter keine visuelle Ermittlung der in ihm noch vorhandenen Restmenge an abzugebender Substanz zuläßt. Dies ist von besonderem Nachteil bei der Verabreichung von Inhalationspräparaten, die vielfach den Charakter einer Notfallmedikation besitzen (z.B. Asthmapräparate). Ohne visuelle Kontrolle besteht die Gefahr, daß der Druckbehälter im Notfall leer ist.

Durch die DE-AS 11 08 383 ist ein Druckbehälter in Form von Glasfläschchen mit den Merkmalen des Oberbegriffes des Anspruchs 1 bekannt geworden. Am oberen Ende des Fläschchens befindet sich die Austrittsöffnung. Diese wird in der Regel durch Einpressen und/oder Aufbördeln des Abgabeorgans auf das Fläschchen, beispielsweise eines Dosierventils, mit einer nach oben ragenden meist zylindrischen Kanüle, vielfach unter Verwendung einer elastischen Dichtung zwischen Kopf und Dosierventil, verschlossen.

Der bekannte Druckbehälter aus Glas ist mit einer aufgesprühten oder getauchten Beschichtung aus einem transparenten Kunststoff belegt, mit Ausnahme des Randes, auf den das Dosierventil aufgecrimpt ist. Diese Beschichtung besteht aus einem flexiblen Weichkunststoff, z.B. PVC, mit hoher Dehnung. Die hohe Dehnung ist wichtig, da im Berstfäll des Glasbehälters der Innendruck auf den Weichkunststoff einwirkt. Würde der Weichkunststoff nicht durch Volumenänderung dem Druck nachgeben können, wäre mit einer plötzlichen Zerstörung des Weichkunststoffes durch Auflösung oder Spannungsrißkorrosion zu rechnen.

Dieser bekannte Glas-Druckbehälter hat zwar den Vorteil, daß er, da sowohl der Druckbehälter aus einem transparenten Material (Glas) besteht als auch die Kunststoff-Umhüllung, eine visuelle Ermittlung der Restmenge an abzugebender Substanz ermöglicht.

Nachteilig an dem bekannten Glas-Druckbehälter ist jedoch, daß er trotz Beschichtung mit einem Kunststoff, im Explosionsfall, z.B. durch unsachgemäße Handhabung, nicht sicher genug ist, da die Beschichtung speziell im Bereich des Dosierventils bzw., da sie ballonartig aufgebläht wird, nicht verhindern kann, daß Teile des Glasbehälters geschoßartig in die Umgebung geschleudert werden. Auch ist die Wandstärke des Glasfläschchens mit Nachteil relativ dick.

Es sind auch Applikatoren bekannt (GB 2 109 333 A), bei denen im Rahmen der Montage des Applikators der Glas-Druckbehälter mit einem eng anliegenden Gehäuse, einem Schutzschild, versehen wird. Diese Konzeption hat den Nachteil eines erhöhten Fertigungs- und Montageaufwandes. Gleiches gilt für den bekannten Applikator nach der GB 2 214 891, bei dem ein flexibler Kunststoff-Druckbehälter vorgesehen ist, der von einem festen Kunststoff-Gehäuse umgeben ist.

Die Erfindung geht jedoch von einer davon abweichenden Konzeption aus, nämlich im Rahmen der Fertigung des endgültigen Druckbehälters die Berst- und Splitterschutzschicht aus Kunststoff auf möglichst einfache Weise direkt auf den Glas-Druckbehälter aufzubringen, indem dieser in einem Spritzgußwerkzeug mit einem extrudierten Thermoplasten umgeben wird.

Eine derartige Konzeption ist durch die FR 2 631 581 B1 bekanntgeworden. Diese Schrift beschreibt ein Glasfläschchen mit einem verjüngten Halsteil, das unter Druck mit einer als Aerosol versprühbaren Substanz und einem Treibmittel befüllbar ist, dessen Öffnung mit einem Abgabeorgan verschließbar ist und das mit einem Kunststoffüberzug umspritzt ist.

Im bekannten Fall besteht der Glas-Druckbehälter aus einem Fläschchen mit einem zylindrischen Halsteil, wobei die Spritzgußform so konzipiert ist, daß auch das Halsteil bündig mit der Fläschchenöffnung mit dem Kunststoff umspritzt wird. Bei einer derartigen Ausbildung des Halsteiles des Glasfläschchens ist jedoch das sichere Aufbringen des Abgabeorgans, des Dosierventils, nicht unproblematisch. Der Kunststoffüberzug umgibt ferner das Glasfläschchen vollständig. Im Berstfall kann dabei der Überzug sich partiell aufblähen und platzen und somit seine Berst- und Splitterschutzeigenschaft verlieren. Über die Art des Kunststoffmaterials ist weiterhin in der vorgenannten Schrift keine Aussage gemacht; sie wird danach nicht als funktionell wesentlich angesehen.

Der Erfindung liegt die Aufgabe zugrunde, ausgehend von dem aus der DE-AS 11 08 383 bekannten Glasfläschchen, das unter Druck mit einer als Aerosol versprühbaren Substanz und einem Treibmittel befüllbar ist, das ein verjüngtes Halsteil mit einem öffnungsseitig angeformten wulstartigen Abschlußrand zum mechanischen Anbringen eines Abgabeorgans mit dem die Öffnung des Glasfläschchens verschließbar ist, besitzt, und das von einem Kunststoffüberzug umhüllt ist, der mehrere lochartige Druckaustrittsöffnungen besitzt, dieses so auszubilden, daß eine Reduzierung der Wandstärke des Glasfläschchens möglich ist und andererseits der Berst- und Splitterschutz beträchtlich erhöht wird.

Die Lösung dieser Aufgabe gelingt erfindungsgemäß durch die Merkmale:
- der Kunststoffüberzug umfaßt auch den wulstartigen Abschlußrand und ist im Wege des Spritzgießens aufgebracht, und
- der umspritzte Kunststoffüberzug besteht aus einem elastischen Kunststoffmaterial mit ausgeprägt hoher Schwindung und ist auf dem Glasfläschchen aufgeschrumpft.

Durch den wulstartigen Abschlußrand ist eine sichere und dauerhafte mechanische Aufbringung des Abgabeorgans möglich. Da der Kunststoffüberzug auch den Abschlußglasrand mit einschließt, wird das Abgabeorgan auch bei einem Bersten des Glaskörpers noch mechanisch gehalten, was den Berstschutz erhöht. Durch die Druckaustrittsöffnungen wird verhindert, daß sich der Kunststoffüberzug aufblähen kann, was ebenfalls den Berst- und Splitterschutz beachtlich erhöht.

Im Berstfall können die eingefüllte Substanz und das Treibmittel durch diese Druckaustrittsöffnungen entweichen. Dadurch, daß der Glasbehälterinhalt austreten kann, ist weiterhin die Gefahr eines chemischen Angriffes durch die eingefüllte Substanz auf das Überzugsmaterial (Spannungsrißkorrosion) und damit die Explosionsgefahr weiter vermindert.

Durch die Verwendung eines elastischen Kunststoffmaterials mit ausgeprägt hoher Schwindung (Schrumpfung) wurde in überraschender Weise gefunden, daß die Druckbelastbarkeit des umspritzten Glasfläschchens um ein Vielfaches höher liegt als die Druckbelastbarkeit des reinen Glasfläschchens. Dieser Effekt erlaubt eine dünnere Wandstärke des Glasfläschchens. Die Elastizität des Kunststoffmaterials gleicht dabei den Schrumpf aus.

Als Kunststoffmaterialien kommen bevorzugt Polypropylen (PP), oder Polyethylen (PE) oder ein Polyamid (PA) zur Anwendung. Auch Polykarbonat ist verwendbar.

Gemäß einer Weitergestaltung des erfindungsgemäßen Fläschchens sind die Druckaustrittsöffnungen im zylindrischen Mantel des Fläschchenkörpers nahe dem Bodenbereich, vorzugsweise vier, paarweise gegenüberliegend, ausgeformt. Diese Ausbildung erlaubt auf einfache Weise die Ausformung der Druckaustrittsöffnungen durch gefederte Zentrierstifte der Spritzgußform, die während des Spritzgießens das Fläschchen zugleich haltern.

Die erfindungsgemäßen Glasfläschchen kommen in verschiedenen Ausbaustufen in den Handel. In der Grundform wird das Glasfläschchen ohne montiertes Abgabeorgan geliefert. Es ist auch die Lieferform mit aufgebrachtem Abgabeorgan denkbar. Dabei kann das Glasfläschchen sowohl befüllt als auch unbefüllt sein. Alle diese Handelsformen verwenden jedoch das erfindungsgemäße Fläschchen und werden daher vom Schutz erfaßt.

Hinsichtlich des Verfahrens zum Herstellen des erfindungsgemäßen Glasfläschchens gelingt die Lösung der Aufgabe mit den Verfahrensschritten:
- Herstellen des kompletten Glasfläschchens mit Bodenteil, zylindrischem Mantelteil, verjüngtem Halsteil einschließlich wulstartigem Abschlußrand gemäß konventioneller Glas-Technologie,
- Behandeln der Außen-Oberfläche des aus dem Kühlofen der Technologiestraße austretenden Glasfläschchens mit einem Silikonöl und anschließender Temperung,
- Umspritzen des kompletten Fläschchens einschließlich des Abschlußrandes mit einem elastischen Kunststoffmaterial mit ausgeprägt hoher Schwindung, praktisch ohne Nachdrücken des Kunststoffmaterials,
- Ausformen von lochartigen Druckaustrittsöffnungen im umspritzten Kunststoffüberzug.

Die Oberflächenbehandlung des Glasfläschchens bewirkt dabei mit Vorteil ein besseres Fließverhalten des Kunststoffes in der Gießform, ferner ein Verhindern irgendwelcher chemischer oder physikalischer Verbindungen zwischen den Werkstoffen Glas und Kunststoff sowie ein Einfrieren des Oberflächenzustandes des Glases nach dem Kühlofen.

Neben dem Herstellen des Glasfläschchens gemäß generell bekannter, konventioneller Glastechnologie ist auch das Umspritzen solcher Glasfläschchen mit Kunststoff durch die zitierte FR 2 631 581 bekannt geworden, die jedoch keine Aussagen zu der Schwindung und dem Nachdrücken macht.

Für die Vorrichtung zur Durchführung dieses Verfahrens hinsichtlich der Aufbringung des Kunststoffüberzuges auf das zuvor hergestellte Glasfläschchen mit einem an die Fläschchenform angepaßten, durch die vorgenannte FR 2 631 581 bekannten Spritzgußwerkzeug, dem der extrudierte Kunststoff zuführbar ist, gelingt die Lösung der Aufgabe dadurch, daß eine das Fläschchen zentrierend halternde Einrichtung mit fingerartigen, gefederten Stegen, die während des Gießens unmittelbar am Mantel des Fläschchenkörpers anliegen und dabei die Druckaustrittsöffnungen ausformen, vorgesehen ist.

Mittels dieser Vorrichtung ist auf sehr einfache Weise das erfindungsgemäß umspritzte Glasfläschchen herstellbar.

Weitere Merkmale, Vorteile und Anwendungsmöglichkeiten der Erfindung ergeben sich anhand der Beschreibung von in den Zeichnungen dargestellten Ausführungsbeispielen der Erfindung.

Es zeigen:
- Fig. 1: das erfindungsgemäß ausgebildete, mit Kunststoff umspritzte Glasfläschchen im Maßstab von 2:1,
- Fig. 2: eine schematische Darstellung des Verfahrens zur Herstellung des Fläschchens nach Fig. 1,
- Fig. 3: eine detaillierte schematische Darstellung des Spritzgußwerkzeuges der Fig. 2.

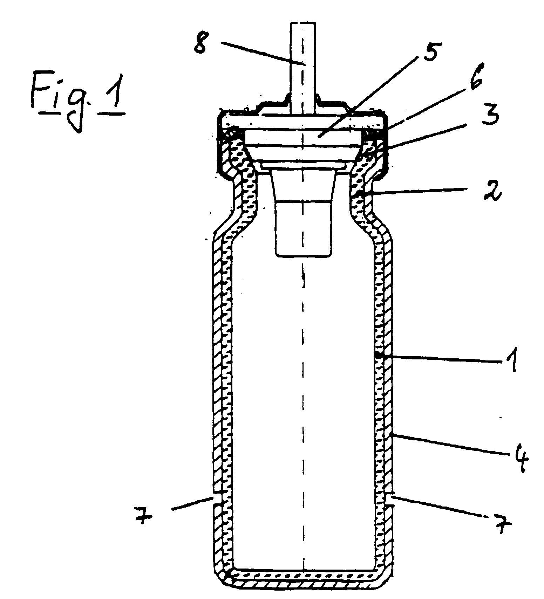

Die Fig. 1 zeigt einen Druckbehälter in Form eines Glasfläschchens 1 mit einem verjüngten Halsteil 2, das öffnungsseitig einen wulstartigen Abschlußrand 3 besitzt. Das Glasfläschchen kann z.B. aus Borosilikatglas oder einem Kalk-Natronglas bestehen. Die Form des Glasfläschchens ist maßgebend von der Druckfestigkeit bestimmt. Im vorliegenden Ausführungsbeispiel soll das Glasfläschchen unter Druck mit einer als Aerosol versprühbaren, insbesondere medizinisch wirksamen Substanz und einem Treibmittel befüllbar sein. Es muß daher Drücken bis zu 15 bar widerstehen.

Das in Fig. 1 dargestellte Glasfläschchen weist eine Höhe von 54 mm bei einem Außendurchmesser von 20 mm auf, d.h., das Verhältnis von Länge zu Durchmesser beträgt ca. 3,4. Dies ist ein bevorzugtes Verhältnis für das erfindungsgemäße Fläschchen.

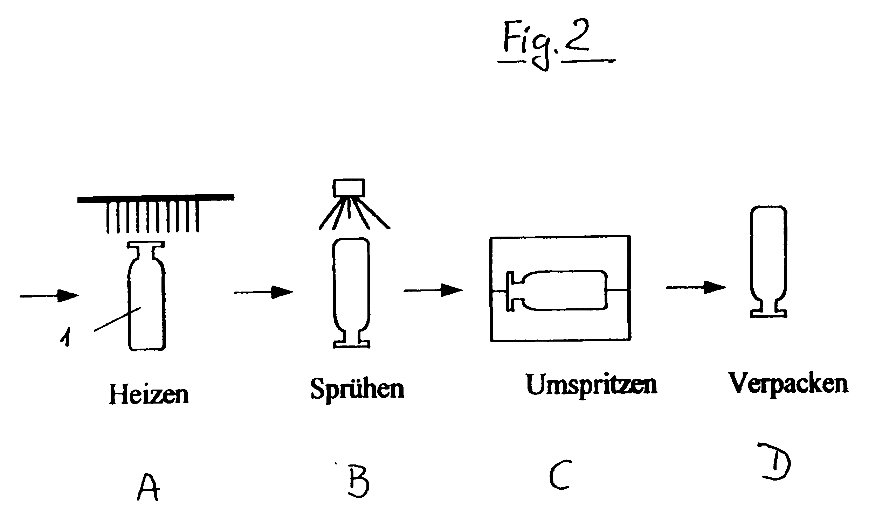

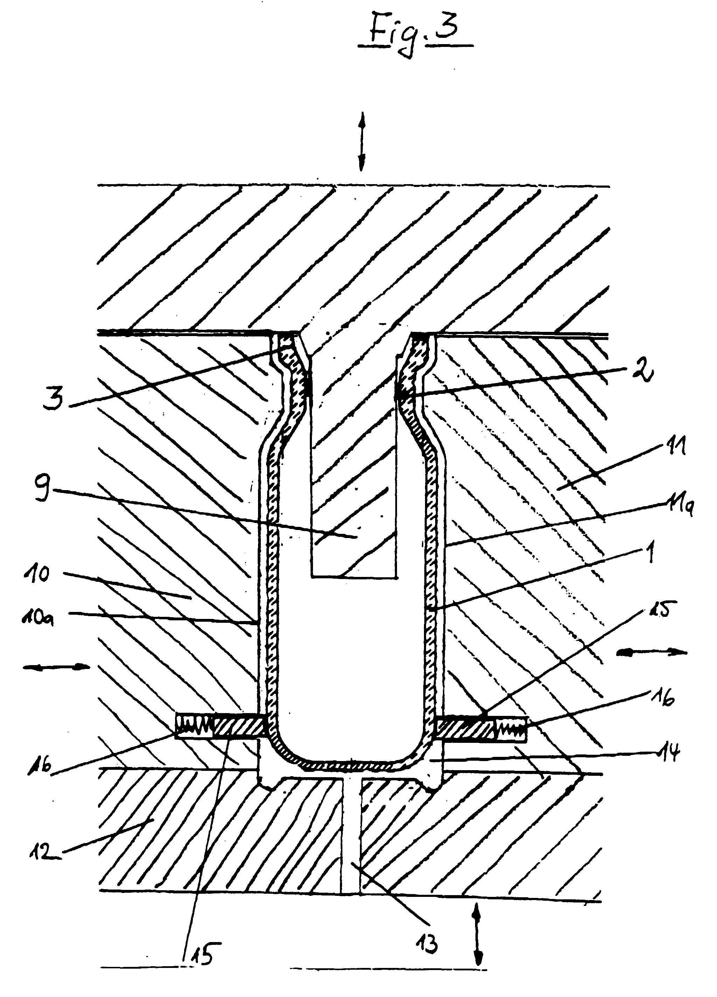

Wie noch verfahrensmäßig anhand der Fig. 2 und 3 näher erläutert wird, ist das Glasfläschchen 1 mit einem Überzug 4 aus einem elastischen, vorzugsweise transparent oder opak aushärtendem Kunststoffmaterial mit ausgeprägt hoher Schwindung (Schrumpfung) umspritzt. Die Elastizität ist notwendig, um den hohen Schrumpf auszugleichen. Durch den hohen Schrumpf wird eine Vorspannkraft auf das Glasfläschchen ausgeübt, ähnlich wie bei Spannbeton, so daß in überraschender Weise die Druckbelastbarkeit des umspritzten Glasfläschchens um ein Vielfaches höher liegt als diejenige des reinen Glasfläschchens. Dieser Effekt erlaubt daher eine relativ geringe Glas-Wandstärke. Sie beträgt im dargestellten Beispiel 1,5 mm bei einer Dicke des Überzuges von 1 mm. Als Kunststoffmaterialien dieser Art kommen insbesondere in Betracht: Polypropylen (PP), Polyethylen (PE) oder Polyamide (PA). Die Größe der Schwindung liegt in der Größenordnung von 0,6-2 % (Volumenprozent).

Das Aufbringen des Kunststoffüberzuges durch Spritzgießen hat gegen das Aufbringen z.B. durch Tauchen den Vorteil, daß Unebenheiten in der Außenfläche des Glasfläschchens ausgeglichen werden können und daß Formen andere als die Fläschchenform ausformbar sind, z.B. ein Überzug mit einem völlig ebenen Bodenteil, was eine hohe Standfestigkeit des umspritzten Glasfläschchens im Rahmen seiner Befüllung erlaubt. Der Bodenbereich des Glasfläschchens kann dann halbkugelförmig nach außen gewölbt sein, um auftretende Zugspannungen auf ein Minimum zu reduzieren.

Die Öffnung des Fläschchens ist mit einem Abgabeorgan 5 unter Zwischenschaltung einer Dichtung 6 verschließbar, das durch Verkrimpen oder/und Aufbördeln auf den wulstartigen Abschlußrand 3 mechanisch befestigt ist. Der Fläschchenrand ist dabei spitz zulaufend ausgebildet, um eine hohe Dichtwirkung zu erzielen. Im Ausführungsbeispiel ist das Abgabeorgan ein Dosierventil. Wie man aus Fig. 1 erkennt, umschließt der Kunststoffüberzug 4 dabei auch den wulstartigen Abschlußrand 3. Das Abgabeorgan 5 wird daher auch bei einem Bruch des Glasrandes noch mechanisch gehalten, was den Berstschutz beachtlich erhöht.

In dem umspritzten Kunststoffüberzug 4 sind mehrere lochartige Druckdurchtrittsöffnungen 7 vorgesehen, von denen in der Fig. 1 zwei dargestellt sind. Vorzugsweise sind vier Öffnungen, paarweise gegenüberliegend, ausgeformt. Die Druckaustrittsöffnungen 7 sind vorzugsweise im zylindrischen Mantel des Überzuges 4 des Fläschchenkörpers 1 ausgeformt. Das hängt mit dem Spritzwerkzeug zusammen, das anhand der Fig. 3 noch näher erläutert wird. Durch die Druckaustrittsöffnungen 7 wird verhindert, daß sich der Kunststoffüberzug aufblähen kann, denn im Berstfall können die eingefüllte Substanz und das Treibmittel durch die Druckaustrittsöffnungen 7 unter raschem Abbau des Innendruckes entweichen. Ferner wird die Gefahr eines chemischen Angriffes durch die eingefüllte Substanz auf das Überzugsmaterial durch Spannungsrißkorrosion und damit die Explosionsgefahr weiter vermindert.

Der Glas-Druckbehälter 1 wird in der Weise befüllt, daß die abzugebende(n) Substanz(en) vorab eingebracht oder gemeinsam mit dem(n) Treibmittel(n) durch das Dosierventil 5 eingepreßt werden.

Zur Vorbereitung der Verabreichung wird der Glas-Druckbehälter 1 in ein (nicht dargestelltes) zylindrisches Teil mit einem Abgabekopf eingeschoben, wobei die zylindrische Kanüle 8 des Dosierventils 5 formschlüssig in eine ebenfalls zylindrische mit einem Kanal verbundene, innen hohle Aufnahme des Abgabekopfes geführt sein kann. Der Kanal mündet in der Regel in eine in der Stirnseite des Abgabekopfes als Sprühkopf ausgebildete Öffnung.

Der Abgabekopf kann ein Mund- oder Nasenstück aufweisen, welches in einigen Fällen mit Hilfe einer aufsetzbaren Kappe gegen Verschmutzung geschützt werden kann. Derartige Abgabeköpfe sind in der Medizintechnik hinreichend bekannt und brauchen daher an dieser Stelle nicht näher erläutert zu werden.

Anhand der Fig. 2 und 3 soll nunmehr das bevorzugte Herstellen des umspritzten Glasfläschchens nach Fig. 1 erläutert werden.

Im ersten Verfahrensschritt wird das komplette Glasfläschchen 1 mit Bodenteil, zylindrischem Mantelteil, verjüngtem Halsteil einschließlich wulstartigem Abschlußrand gemäß konventioneller Glas-Technologie hergestellt. Da diese Technik bekannt ist, ist sie in der Fig. 2 nicht gesondert dargestellt.

Nach dem Verlassen des Kühlofens (Stufe A) wird die Außen-Oberfläche des Glasfläschchens mit einem Silikonöl besprüht (Stufe B) und anschließend getempert. Diese Oberflächenbehandlung bewirkt ein besseres Fließverhalten des Kunststoffes in der Gießform sowie verhindert chemische oder physikalische Verbindungen zwischen Glas und Kunststoff.

Durch dieses Silikonisieren der äußeren Oberfläche des Glasfläschchens entsteht zwischen dem Glasfläschchen und dem Kunststoffüberzug eine Silikon-Zwischenschicht, die sehr dünn ist und daher in Fig. 1 nicht dargestellt ist.

In der Stufe C erfolgt das Umspritzen des kompletten Glasfläschchens mit dem elastischen Kunststoffmaterial sowie das Ausformen der lochartigen Druckaustrittsöffnungen. Das zugehörige Spritzgußwerkzeug ist in der Fig. 3 näher schematisch dargestellt. Die Herstellung schließt dann in der Stufe D mit dem Verpacken des umspritzten Glasfläschchens ab.

Das Spritzgußwerkzeug nach Fig. 3 für das Glasfläschchen 1 mit dem Halsteil 2 und dem Abschlußrand 3 besteht im wesentlichen aus einem Zapfen oder Dorn 9, auf dem das Glasfläschchen aufgespannt, d.h. gehaltert ist, aus zwei in Pfeilrichtungen verfahrbaren Backen 10, 11 mit inneren, der Form des Glasfläschchens angepaßten Formflächen 10a, 11a, sowie aus einem Bodenteil 12 mit einer Öffnung 13, die einerseits mit dem Zwischenraum 14 zwischen Glasfläschchen 1 und Formflächen 10a, 11a und die andererseits mit einem nicht dargestellten Extruder zwecks Zufuhr des zu umspritzenden Kunststoffes in Verbindung steht.

Das Spritzgußwerkzeug weist ferner eine das Glasfläschchen 1 zentrisch halternde Einrichtung mit fingerartigen Stegen 15 auf, die während des Spritzgießens unmittelbar am Mantel des Glasfläschchens anliegen und dabei die lochartigen Druckaustrittsöffnungen ausformen.

Diese fingerartigen Stege 15 sind dabei über Federn 16 nachgebend in den Backen 10, 11 auf konventionelle Weise mechanisch befestigt.

In der Fig. 3 sind dabei zwei Stege 15 dargestellt. Vorzugsweise sind vier derartige Stege, paarweise gegenüberliegend, vorgesehen.

Zum Spritzgießen wird zunächst das Glasfläschchen 1 auf den Zapfen 9 geschoben. Danach werden die Backen 10, 11 soweit zusammengefahren, bis der die Dicke des Überzuges bestimmende Zwischenraum 14 erreicht ist. Zum Schluß wird das Bodenteil 12 an die Backen 10, 11 herangefahren und der Kunststoff aus dem Extruder über die Bohrung 13 in die Form gedrückt. Während dabei üblicherweise ein Nachdrücken des Kunststoffes erfolgt, um die Schwindung zu minimieren, wird im Fall der Erfindung praktisch ohne das sog. Nachdrücken gearbeitet, um auch insoweit eine möglichst hohe Schwindung zu erzielen. Nach dem Spritzgießen wird das Glasfläschchen 1 mit dem aufgeschrumpften Kunststoffüberzug 4 (Fig. 1) in üblicher Weise aus dem Spritzgußwerkzeug entnommen und der Stufe D der Fig. 2 zugeführt.

Es versteht sich, daß die Fig. 3 lediglich ein, wenn auch sehr vorteilhaftes, Ausführungsbeispiel darstellt und daß auch andere Formen des Spritzgußwerkzeuges denkbar sind, im Rahmen des Gegenstandes des Anspruchs 7.

## Patentansprüche

1. Glasfläschchen (1), das unter Druck mit einer als Aerosol versprühbaren Substanz und einem Treibmittel befüllbar ist, das ein verjüngtes Halsteil (2) mit einem öffnungsseitig angeformten wulstartigen Abschlußrand (3) zum mechanischen Anbringen eines Abgabeorgans (5) mit dem die Öffnung des Glasfläschchens verschließbar ist, besitzt, und das von einem Kunststoffüberzug (4) umhüllt ist, der mehrere lochartige Druckaustrittsöffnungen (7) besitzt, gekennzeichnet durch die Merkmale:
- der Kunststoffüberzug (4) umfaßt auch den wulstartigen Abschlußrand (3) und ist im Wege des Spritzgießens aufgebracht, und
- der umspritzte Kunststoffüberzug (4) besteht aus einem elastischen Kunststoffmaterial mit ausgeprägt hoher Schwindung und ist auf dem Glasfläschchen aufgeschrumpft.

2. Glasfläschchen nach Anspruch 1, dadurch gekennzeichet, daß als Kunststoffmaterial Polypropylen (PP) oder Polyethylen (PE) oder ein Polyamid (PA) Verwendung findet.

3. Glasfläschchen nach Anspruch 1 oder 2, dadurch gekennzeichnet, daß die Druckaustrittsöffnungen (7) im zylindrischen Mantel des Überzuges (4) des Fläschchenkörpers (1) nahe dem Bodenbereich ausgeformt sind.

4. Glasfläschchen nach Anspruch 3, dadurch gekennzeichnet, daß vier Druckaustrittsöffnungen (7), paarweise gegenüberliegend, ausgeformt sind.

5. Glasfläschchen nach einem der Ansprüche 1 bis 4, dadurch gekennzeichnet, daß zwischen der äußeren Oberfläche des Glasfläschchens (1) und dem Kunststoffüberzug (4) eine durch Silikonisieren der Oberfläche des Glasfläschchens erzeugte Silikon-Zwischenschicht vorgesehen ist.

6. Verfahren zum Herstellen des Glasfläschchens nach Anspruch 1 oder einem der folgenden mit den Verfahrensschritten:
- Herstellen des kompletten Glasfläschchens mit Bodenteil, zylindrischem Mantelteil, verjüngtem Halsteil einschließlich wulstartigem Abschlußrand gemäß konventioneller Glas-Technologie,
- Behandeln der Außen-Oberfläche des aus dem Kühlofen der Technologiestraße austretenden Glasfläschchens mit einem Silikonöl und anschließender Temperung,
- Umspritzen des kompletten Fläschchens einschließlich des Abschlußrandes mit einem elastischen Kunststoffmaterial mit ausgeprägt hoher Schwindung, praktisch ohne Nachdrücken des Kunststoffmaterials,
- Ausformen von lochartigen Druckaustrittsöffnungen im umspritzten Kunststoffüberzug.

7. Vorrichtung zur Durchführung des Verfahrens nach Anspruch 6 hinsichtlich der Aufbringung des Kunststoffüberzuges auf das zuvor hergestellte Glasfläschchen, mit einem an die Fläschchenform angepaßten Spritzgußwerkzeug (9, 10, 11, 12), dem der extrudierte Kunststoff zuführbar ist, dadurch gekennzeichnet, daß eine das Fläschchen zentrierend halternde Einrichtung mit fingerartigen, gefederten Stegen (15, 16), die während des Gießens unmittelbar am Mantel des Fläschchenkörpers (1) anliegen und dabei die Druckaustrittsöffnungen (7) ausformen, vorgesehen ist.

8. Vorrichtung nach Anspruch 7, dadurch gekennzeichnet, daß vier Stege (15, 16), paarweise gegenüberliegend, vorgesehen sind.

## Claims

1. Glass vial (1), which can be filled under pressure with a substance that can be sprayed as an aerosol and a propellant, has a tapered neck part (2) with a terminating rim (3) which is integrally moulded in a bead shape on the opening side for the purpose of mechanically fitting a discharge element (5) with which the opening of the glass vial can be closed, and is covered by a plastic covering (4) which has a number of hole-like pressure outlet openings (7), characterized by the following features:
- the plastic covering (4) also encloses the bead-like terminating rim (3) and is applied during the course of the injection moulding, and
- the injection-moulded plastic covering (4) consists of an elastic plastic material having a pronounced high shrinkage, and is shrunk onto the glass vial.

2. Glass vial according to Claim 1, characterized in that the plastic material used is polypropylene (PP) or polyethylene (PE) or a polyamide (PA).

3. Glass vial according to Claim 1 or 2, characterized in that the pressure outlet openings (7) are shaped out of the cylindrical circumference of the covering (4) of the body of the vial (1), close to the bottom area.

4. Glass vial according to Claim 3, characterized in that four pressure outlet openings (7) are shaped out, located opposite each other in pairs.

5. Glass vial according to one of Claims 1 to 4, characterized in that a silicone intermediate layer produced by siliconizing the surface of the glass vial is provided between the outer surface of the glass vial (1) and the plastic covering (4).

6. Process for producing the glass vial according to Claim 1 or one of those following, with the process steps:
- producing the complete glass vial with bottom part, cylindrical circumferential part, tapered neck part including bead-like terminating rim in accordance with conventional glass technology,
- treating the outer surface of the glass vial emerging from the cooling oven of the technology line with a silicone oil and subsequent annealing,
- encapsulating the complete vial, including the terminating rim, by injection moulding with an elastic plastic material having a pronounced high shrinkage, virtually without subsequently pressing the plastic material,
- shaping out hole-like pressure outlet openings in the injection-moulded plastic covering.

7. Apparatus for carrying out the process according to Claim 6 with regard to the application of the plastic covering to the previously produced glass vial, using an injection-moulding tool (9, 10, 11, 12) which is matched to the shape of the vial and to which the extruded plastic can be fed, characterized in that a device holding and centring the vial is provided with finger-like, sprung webs (15, 16) which, during the moulding operation, rest directly on the circumference of the body of the vial (1) and, in so doing, shape out the pressure outlet openings (7).

8. Apparatus according to Claim 7, characterized in that four webs (15, 16) are provided, located opposite each other in pairs.

## Revendications

1. Flacon en verre (1), qui peut être rempli sous pression à l'aide d'une substance pulvérisable en tant qu'aérosol et d'un agent porogène, qui possède une pièce de col effilée (2) ayant un bord de fermeture (3) sous forme de renflement formé du côté de l'ouverture, en vue de l'application mécanique d'un organe d'évacuation (5), grâce auquel l'ouverture du flacon en verre peut être obturée, et qui est entourée d'un revêtement en matière synthétique (4), qui possède plusieurs orifices d'évacuation de pression sous forme de trous (7), caractérisé par les caractéristiques:
- le revêtement en matière synthétique (4) comprend également le bord de fermeture sous forme de renflement (3) et est appliqué par moulage par injection; et
- le revêtement en matière synthétique pulvérisé sur la périphérie (4) se compose d'un matériau synthétique élastique à retrait très marqué et est fixé sur le flacon en verre par thermoformage.

2. Flacon en verre selon la revendication 1, caractérisé en ce que l'on utilise en tant que matériau de matière synthétique le polypropylène (PP) ou le polyéthylène (PE) ou un polyamide (PA).

3. Flacon en verre selon la revendication 1 ou 2, caractérisé en ce que les orifices d'évacuation de pression (7) dans l'enveloppe cylindrique du revêtement (4) du corps de flacon (1) sont formés à proximité de la zone de fond.

4. Flacon en verre selon la revendication 3, caractérisé en ce que quatre orifices d'évacuation de pression (7) sont formés par paires, en face à face les uns par rapport aux autres.

5. Flacon en verre selon l'une quelconque des revendications 1 à 4, caractérisé en ce que l'on prévoit, entre la surface externe du flacon en verre (1) et le revêtement en matière synthétique (4), une couche intermédiaire aux silicones produite par un traitement aux silicones de la surface du flacon en verre.

6. Procédé de fabrication du flacon en verre selon la revendication 1 ou selon l'une quelconque des revendications suivantes grâce aux étapes de procédé:
- fabrication du flacon en verre complet avec partie de fond, enveloppe cylindrique, pièce de col effilée y compris bord de fermeture sous forme de renflement conformément à la technologie classique du verre,
- traitement de la surface externe du flacon en verre émergeant du four de refroidissement de la chaîne technologique à l'aide d'une huile aux silicones et d'un recuit subséquent,
- pulvérisation, sur la périphérie, du flacon en verre complet, y compris du bord de fermeture à l'aide d'un matériau de matière synthétique élastique à retrait très marqué, pratiquement sans compression ultérieure du matériau de matière synthétique,
- formation d'orifices d'évacuation de pression sous forme de trous dans le revêtement en matériau synthétique pulvérisé en périphérie.

7. Dispositif en vue de l'exécution du procédé selon la revendication 6 en rapport à l'application du revêtement en matière synthétique sur le flacon en verre fabriqué antérieurement, à l'aide d'un outil de moulage par injection (9, 10, 11, 12) adapté à la forme du flacon en verre, auquel l'on peut acheminer la matière synthétique extrudée, caractérisé en ce que l'on prévoit un dispositif de maintien centrant le flacon en verre, ayant des barrettes élastiques sous forme de doigts (15, 16), qui s'appuient pendant la coulée directement sur l'enveloppe du corps de flacon en verre (1) et qui forment en l'occurrence les orifices d'évacuation de pression (7).

8. Dispositif selon la revendication 7, caractérisé en ce que l'on prévoit quatre barrettes (15, 16) disposées par paires, faisant face l'une à l'autre.
